Europäisches Patentamt

**European Patent Office**

Office européen des brevets

(11) Publication number: **0 115 676**
**A2**

# (12) EUROPEAN PATENT APPLICATION

(21) Application number: **83307356.2**

(22) Date of filing: **02.12.83**

(51) Int. Cl.³: **G 01 D 15/16**

(30) Priority: **08.12.82 US 447742**

(43) Date of publication of application: **15.08.84**
**Bulletin 84/33**

(84) Designated Contracting States: **DE FR GB IT NL**

(71) Applicant: **HONEYWELL INC., Honeywell Plaza, Minneapolis Minnesota 55408 (US)**

(72) Inventor: **Lane, Charles E., III, 766 Moredon Road, Meadowbrook Pennsylvania 19046 (US)**

(74) Representative: **Harman, Michael Godfrey, Honeywell Control Systems Ltd. Patent Department Charles Square, Bracknell Berkshire RG12 1EB (GB)**

(54) **Ink supply unit and method of making same.**

(57) The ink supply unit comprising a porous ink containing body (2) having a radially outer surface (16) which in use is impacted by a printing element, and an ink impervious member (6) located adjacent a side surface of the body (2) to prevent ink loss therefrom. The surface (16) is treated to improve its resistance to impact by the printing element. One method of making the unit is to mould the member (16) onto the outer and side surfaces of body (2) and then remove that portion of the moulded member from surface (16) to expose the body, the material being impregnated into the pores of body (2) adjacent surface (16) to improve its impact resistance.

## INK SUPPLY UNIT AND METHOD OF MAKING SAME

The present invention relates to an ink supply unit, and to a method of making the unit.

The unit may form part of an ink cartridge of a multicolour recorder.

A multicolour ink cartridge for a recorder has been used to provide a means for selectively introducing a desired ink colour for printing by selectively energizable recording elements on a recording medium in the recorder. Alternatively, a fixed colour recording operation in the recorder can be effected by maintaining a preselected alignment of the recording head in the recorder and a desired colour in the multicolour ink cartridge. An example of a multicolour cartridge and a recorder for using the same is shown in U.S. Patent No. 4,210,917. While the ink cartridge shown therein provides a multicolour ink source suitable for use with a recorder either in a single or plural colour operation, that ink cartridge structure has inherent limitations occasioned by the number of separate parts used in the cartridge which require excessive manufacturing costs and assembly time. Additionally, the ink containing elements forming the ink cartridge have a relatively short operating life as a result of the closure of ink supplying surface pores by the impact of the printing elements from the print head thereon which effect produces an inability to utilize the full capacity of the ink stored therein by interrupting ink supplying capillary paths to the recording surface of the ink cartridge. Accordingly, it would be desirable to provide an ink cartridge capable of being assembled by an automatic assembly operation as well as exhibiting a significantly improved operating life and utilization of the recording ink stored therein.

According to the present invention, there is provided an ink supply unit comprising a porous ink containing body having a surface to be impacted by a printing element, and an ink impervious member located adjacent another surface of the body to prevent ink loss therefrom, characterized in that the first mentioned surface is treated to improve its resistance to impact by the element.

According to the invention there is also provided a method of making an ink supply unit including the steps of moulding an ink impervious member onto two faces of a porous ink containing body, and removing that portion of the moulded member from one of the faces to expose the ink containing body for impact by a printing element.

An embodiment of the invention will now be described by way of example only, with reference to the accompanying drawings, in which:-

Figure 1 is a diagrammatic cross-section through an ink supply unit of the present invention,

Figures 2A, 2B, 2C and 2D illustrate the steps in the method of manufacturing the ink supply unit shown in Figure 1 and,

Figure 3 is an assembled ink cartridge using the ink supply unit shown in Figure 1.

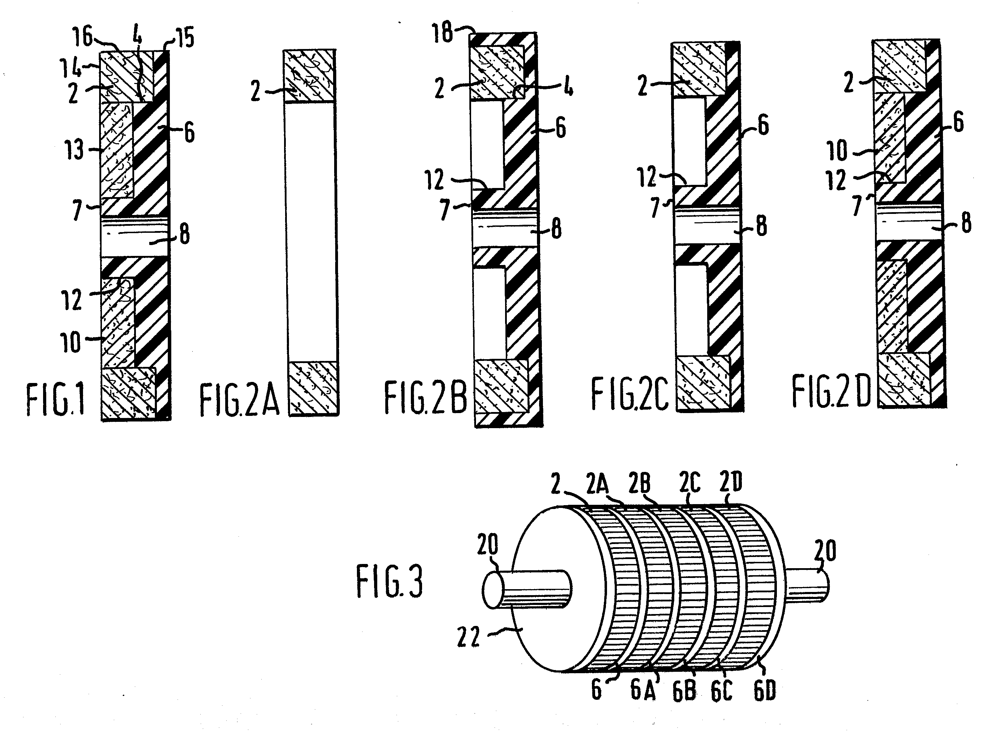

Referring to Figure 1, the ink supply unit includes an ink containing ring 2, which may be of a felt type material, supported on a shoulder 4 of an ink impervious disc 6. The disc 6 has a centre hub 7 with a coaxial opening 8 for mounting the disc 6 on a coaxial support shaft as described hereinafter. An ink reservoir washer 10 of a felt type material similar to that of the ring 2 is positioned adjacent to a radially inner surface of the ring 2 and is located in a coaxial recess 12 of the ink impervious disc 6. An exposed side face 13 of the washer 10 is substantially coextensive with a side face 14 of the ring 2 and an end of the hub 7. A peripheral edge 15 of the disc 6 is substantially coextensive with an edge face 16 of the ring 2.

Figures 2A, 2B, 2C and 2D illustrate the steps for manufacturing the ink reservoir element shown in Figure 1. An ink containing ring 2 made of a felt type material, as shown in Figure 2A, is positioned in a mould (not shown) and a suitable thermoplastic material, e.g., Nylon, is injected or compressed into the mould around the ink containing ring 2 to form an ink impervious layer 6. The moulded ink impervious disc 6 includes a coaxial recess 12 located radially inwardly of the ring 2, a centre coaxial hub 7 with a coaxial hole 8 and an outer portion 18 extending from a side portion of the disc 6 across the outer edge face 16 of the ink ring 2, as shown in Figure 2B. As shown in Figure 2C, a machining operation is used to remove the outer portion 18 from the edge face of the ink ring 2 to create the peripheral edge 15 of the disc 6 substantially flush with the outer edge surface 16 of the ring 2. However, during the moulding operation, the plastics material used for the disc 6 is allowed to penetrate the outer edge surface 16 of the ring 2 to the extent of coating the fibers forming that surface while allowing an ink supplying pore structure to exist at the outer edge surface 16. This plastics material coating is effective to significantly improve the impact resistance of the fibers at the outer edge surface 16 by edging the surface pores to minimize the closure of the ink supply pores during the recording impact by the recording elements of a recording head during the recording operation. Thus, the recording ink which is carried by capillary action from the interior of the ring 2 to the outer peripheral surface 16 will continue to be available at the plastic material edged surface pores during an extended recording life of the ink supply unit. In Figure 2D, a secondary ink reservoir washer 10 is inserted within the recess 12 of the disc 6 in contact with the radially inner surface of the ring 2 to provide an additional source of recording ink which is distributed into the ring 2 by capillary flow from the washer 10.

In Figure 3, there is shown an assembled ink cartridge using a plurality of the ink supply units shown in Figure 1 mounted side-by-side on a coaxial shaft 20. Additionally, a separate ink impervious washer 22 is mounted on the end of the units adjacent to an exposed side face of a ring 2 and washer 10 in a first one of the units to provide an ink impervious end cover for the ink ring 2 and washer 10 therein. Thus, the first ink unit has a ring 2 and a moulded disc 6 attached thereto while the second ink reservoir element has an ink containing ring 2A with a moulded disc 6A attached thereto. Similarly, the third, fourth and fifth ink rings 2B, 2C and 2D have integrally attached discs 6B, 6C and 6D attached thereto, respectively. The shaft 20 is arranged to be mounted in a recorder and, advantageously, as shown in the aforesaid patent, may be attached to a means for rotating the cartridge 2 to distribute the wear around the periphery of each of the ink containing rings.

0115676

- 5 -

<u>CLAIMS</u>

1. An ink supply unit comprising a porous ink containing body (2) having a surface (16) to be impacted by a printing element, and an ink impervious member (6) located adjacent another surface of the body to prevent ink loss therefrom, characterized in that the first mentioned surface (16) is treated to improve its resistance to impact by the element.

2. The unit of Claim 1, characterized in that said member (6) is of moulded material, and said surface (16) is treated with the same material as member (6).

3. The unit of Claim 1 or 2, characterized in that the body (2) is of annular shape, said member (6) being located adjacent a radially extending side face of the body, and said surface (16) being defined by a circumferentially extending surface of the body.

4. The unit of any one of the preceding claims, characterized in that member (6) is of a thermoplastics material.

5. An ink cartridge including a plurality of ink supply units (2, 2A, 2B, 2C, 2D) according to any one of the preceding claims.

6. The cartridge of Claim 5, characterized in that the units are mounted side-by-side on a shaft and are each impregnated with a respective one of a plurality of different colours.

7. A method of making an ink supply unit including the steps of moulding an ink impervious member onto two faces of a porous ink containing body, and removing that portion of the moulded member from one of the a faces to expose the ink containing body for impact by a printing element.

FIG.1

FIG.2A

FIG.2B

FIG.2C

FIG.2D

FIG.3

0115676

1/1